## Europäisches Patentamt
## European Patent Office
## Office européen des brevets

(19)

(11) Numéro de publication: **0 034 074**
**B1**

(12) **FASCICULE DE BREVET EUROPEEN**

(45) Date de publication du fascicule du brevet:
02.11.83

(21) Numéro de dépôt: **81400065.9**

(22) Date de dépôt: **19.01.81**

(51) Int. Cl.³: **G 01 T 1/142**

(54) Perfectionnements aux dispositifs à électret pour la mesure des rayonnements ionisants.

(30) Priorité: **11.02.80 FR 8002969**

(43) Date de publication de la demande:
**19.08.81 Bulletin 81/33**

(45) Mention de la délivrance du brevet:
**02.11.83 Bulletin 83/44**

(84) Etats contractants désignés:
**AT BE CH DE GB IT LI NL SE**

(56) Documents cités:
**EP - A - 0 018 293**
**FR - A - 2 431 138**

**KERNTECHNIK, vol. 18, no. 8/9 août/septembre 1976, München, DE B. SCHALLPOPP: "Gerät zur automatischen Auswertung von Füllhalter-Dosimetern", pages 352-357**

(73) Titulaire: **Lewiner, Jacques, 5, rue Bory d'Arnex, F-92210 Saint-Cloud (FR)**
Titulaire: **Dreyfus, Gérard, Rue du Viaduc, Villebon S/Yvette F-91120 Palaiseau (FR)**
Titulaire: **Perino, Didier, 10, rue de Bellevue, F-92150 Suresnes (FR)**

(72) Inventeur: **Lewiner, Jacques, 5, rue Bory d'Arnex, F-92210 Saint-Cloud (FR)**
Inventeur: **Dreyfus, Gérard, Rue du Viaduc, Villebon S/Yvette F-91120 Palaiseau (FR)**
Inventeur: **Perino, Didier, 10, rue de Bellevue, F-92150 Suresnes (FR)**

(74) Mandataire: **Behaghel, Pierre et al, CABINET PLASSERAUD 84 rue d'Amsterdam, F-75009 Paris (FR)**

Perfectionnements aux dispositifs à électret pour la mesure des rayonnements ionisants

L'invention concerne les dispositifs à électret destinés à mesurer des rayonnements ionisants ou tout au moins à détecter le dépassement d'un seuil déterminé par l'intensité d'un tel rayonnement ou par la dose intégrée d'un tel rayonnement sur une période prédéterminée.

Les dispositifs en question comprennent un électret, c'est-à-dire une feuille diélectrique chargée électriquement au moins au voisinage de l'une de ses deux faces, deux électrodes conductrices disposées de part et d'autre de cet électret et reliables électriquement entre elles, des moyens pour maintenir écartée de l'électret l'une au moins des électrodes de façon à former contre cet électret au moins une chambre d'ionisation sensible au rayonnement à mesurer, et des moyens pour mesurer la charge de l'électret, charge dont les variations sont directement liées au rayonnement ci-dessus et permettent donc de mesurer ce dernier.

Dans le document FR-A-2 431 138 un dosimètre portatif analogue servant à mesurer une irradiation est également connu, qui utilise un dispositif distinct de lecture et mémorisation de la charge de la chambre à ionisation.

L'invention concerne plus particulièrement, parmi les dispositifs de mesure du genre ci-dessus, ceux qui se divisent en deux sous-ensembles, savoir:

— d'une part, un élément portatif individuel comprenant dans un même boîtier compact ou «cassette» l'électret, les deux électrodes, leurs moyens d'écartement et éventuellement des organes de connexion électrique,

— et d'autre part, un «lecteur» fixe comprenant une poche propre à recevoir la cassette en une position bien déterminée, une source de courant électrique — qui peut être un simple branchement au réseau — des moyens pour identifier la cassette, des moyens de lecture et de mesure de la charge de l'électret contenu dans la cassette, des moyens propres à afficher une information liée au résultat de cette mesure, et éventuellement des organes de connexion électrique propres à coopérer de façon facilement séparable avec ceux de la cassette.

Par l'expression «affichage d'une information» utilisée ci-dessus et dans la suite, il faut comprendre aussi bien un affichage proprement dit de cette information, perceptible par l'usager (visuel, sonore . . .), qu'une application de ladite information à des moyens d'exploitation et notamment d'enregistrement.

La division exposée ci-dessus du dispositif de mesure en deux sous-ensembles est très avantageuse, en particulier lorsque les mesures de radioactivité effectuées ont pour but de contrôler les doses globales de rayonnement reçues par plusieurs personnes évoluant dans des enceintes ou zones sujettes à une contamination radioactive.

La division en question permet en effet de limiter à une cassette très légère, peu encombrante et économique la portion, du dispositif de surveillance, qui est portée par chacune de ces personnes: il suffit de disposer le lecteur fixe à proximité immédiate de la porte donnant accès à l'enceinte ou zone considérée, un tel lecteur unique — constituant lecteur «d'entrée» du processus de contrôle et appelé ci-après «lecteur d'entrée» — suffisant pour assurer le traitement successif d'un très grand nombre de cassettes affectées à des porteurs différents.

La dose d'irradiation reçue par le porteur d'une telle cassette entre son entrée dans l'enceinte et sa sortie de celle-ci — ou plus généralement entre le début et la fin d'une période de surveillance donnée — peut être calculée et affichée par le lecteur d'entrée: il suffit que cet appareil effectue la différence entre les valeurs, de la charge de l'électret contenu dans ladite cassette, mesurées respectivement à l'entrée dudit porteur dans l'enceinte sous contrôle et à la sortie de ce porteur hors de ladite enceinte.

Mais un tel ensemble ne donne pas satisfaction si l'enceinte considérée présente une grande étendue, comme c'est fréquemment le cas pour les installations nucléaires, vu que la consultation fréquente du lecteur d'entrée n'est pas envisageable pour les personnes trop éloignées de cet appareil.

Un remède à cet inconvénient consisterait à multiplier, au sein de l'enceinte, le nombre des lecteurs fixes du genre du lecteur d'entrée, mais il faudrait alors, d'une part, choisir pour ces appareils des modèles très sophistiqués, et, d'autre part, interconnecter ces appareils vu que les données relatives à l'identification des cassettes et aux charges d'entrée de leurs életrets doivent être disponibles à chaque instant sur chacun de ces appareils: une telle formule est donc très onéreuse et très délicate à mettre en œuvre.

L'invention selon les revendications 1 à 12 permet de remédier à ces divers inconvénients d'une manière particulièrement efficace et économique.

Les dispositifs de mesure du genre ci-dessus selon l'invention sont à cet effet essentiellement caractérisés en ce qu'ils comprennent, en plus d'au moins une cassette du genre indiqué et d'au moins un lecteur d'entrée du genre également indiqué, au moins un lecteur auxiliaire et en ce que ces différents sous-ensembles sont agencés de façon telle que l'introduction initiale de chaque cassette dans un lecteur d'entrée ait pour effet d'assurer automatiquement, non seulement la mesure de la charge de l'électret contenu dans cette cassette à cet instant, mais aussi l'enregistrement sur ladite cassette d'une information relative à cette charge, et que l'introduction subséquente de la cassette dans un lecteur auxiliaire ait pour effet d'assurer automatiquement, non seulement la mesure de la nouvelle charge de l'électret à ce nouvel instant, mais aussi la lecture de l'information enregistrée relative à la charge initiale, ainsi que l'affichage d'une donnée liée à la différence entre ces deux charges, notamment de la dose d'irradiation reçue par la cassette entre les deux introductions en question.

A cet effet:

— chaque cassette comprend des moyens propres à recevoir automatiquement l'enregistrement d'une information relative à la charge de son électret lorsqu'elle est introduite initialement dans un lecteur d'entrée et à présenter l'information enregistrée de façon telle qu'elle puisse être lue automatiquement lors de son introduction dans un lecteur auxiliaire,

— chaque lecteur d'entrée comprend, en plus de moyens propres à mesurer la charge instantanée de l'électret contenu dans chaque cassette qui y est introduite, des moyens propres à élaborer l'information ci-dessus et à l'enregistrer sur ladite cassette introduite,

— et chaque lecteur auxiliaire comprend, en plus de moyens propres à mesurer la charge instantanée de l'électret contenu dans chaque cassette qui y est introduite, des moyens propres à lire l'information préalablement enregistrée sur cette cassette et des moyens propres à calculer et à afficher une donnée liée à la différence entre les deux charges successivement mesurées de l'électret, donnée telle que la dose d'irradiation reçue par la cassette entre les instants des deux mesures.

L'invention vise bien entendu, non seulement les installations complètes à cassettes et lecteurs telles que définies ci-dessus, mais aussi, individuellement, les cassettes et lecteurs spéciaux qui les composent.

Dans des modes de réalisation préférés, on a recours en outre à l'une et/ou à l'autre des dispositions suivantes:

— chaque lecteur d'entrée est agencé de façon à pouvoir servir également de lecteur de sortie, c'est-à-dire à pouvoir afficher, lors de la sortie du porteur d'une cassette hors de l'enceinte, la dose totale d'irradiation reçue par ce porteur depuis son entrée dans cette enceinte,

— dans un dispositif selon l'alinéa précédent, le lecteur d'entrée comporte en outre, d'une part, des moyens pour asservir à la réception initiale d'une cassette par ce lecteur une mise en mémoire simultanée de l'identification de cette cassette et de la charge de l'électret contenu dans celle-ci mesurée à l'instant de cette réception initiale et, d'autre part, des moyens pour asservir à la réception suivante de la même cassette par ledit lecteur, non seulement une nouvelle identification de cette cassette et une nouvelle mesure de la charge de l'électret à l'instant de cette autre réception, mais aussi la lecture de la valeur mise en mémoire de ladite charge, le calcul de la différence entre les deux valeurs de charge ainsi respectivement mesurée et lue, et l'affichage de cette différence ou d'un paramètre lié à celle-ci, tel que notamment la dose d'irradiation correspondante,

— le lecteur d'entrée selon au moins l'alinéa qui précède le précédent comporte en outre des moyens pour effacer automatiquement de la cassette l'information enregistrée sur elle lors de sa deuxième réception dans ce lecteur d'entrée,

— le dispositif comprend une pluralité de lecteurs auxiliaires indépendants les uns des autres,

— les moyens prévus sur la cassette pour recevoir l'enregistrement indiqué sont d'un type magnétique et se présentent sous la forme d'une plaque magnétique, les moyens d'enregistrement et de lecture de l'information correspondante étant alors des têtes magnétiques,

— les moyens prévus sur la cassette pour recevoir l'enregistrement indiqué sont d'un type électronique et sont reliés à un connecteur à contacts multiples,

— les moyens prévus sur la cassette pour recevoir l'enregistrement indiqué sont d'un type électronique et des moyens sont prévus pour transmettre par induction magnétique ou électrique (liaison capacitive) l'information à enregistrer du lecteur d'entrée à la cassette,

— chaque cassette comprend une face ouvrable propre à être ouverte et orientée de façon telle, lors de l'introduction de cette cassette dans un lecteur, que cette introduction assure automatiquement la mise en place, à travers ladite face ouverte, de moyens de mesure de la charge de l'électret, moyens compris par le lecteur,

— dans une cassette selon l'alinéa précédent, un volet de protection est prévu pour obturer de façon étanche la face ouvrable de la cassette en dehors des instants de mesure et éventuellement cour-circuiter en même temps ses deux électrodes.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

La figure 1, de ce dessin, montre schématiquement une cassette à électret présentée à l'entrée d'une poche de réception de cette cassette comprise par un lecteur d'entrée, ladite cassette et ledit lecteur étant établis conformément à l'invention.

La figure 2 montre schématiquement la cassette précédente introduite à fond dans la poche de réception comprise par un lecteur auxiliaire conforme à l'invention.

La figure 3 est le schéma général d'une installation équipée de cassettes et lecteurs selon l'invention.

La cassette C comprend un boîtier 1 se présentant notamment sous la forme d'un parallélépipède rectangle plat, notamment en matière plastique, contenant lui-même:

— un électret 2 chargé électriquement au voisinage d'au moins l'une de ses faces $2_1$, comme symbolisé par les signes — bien que la charge en question puisse être aussi bien positive que négative,

— et deux électrodes 3 et 4 constituées par des plaques conductrices de l'électricité parallèles entre elles et à l'électret, l'une 3 de ces plaques étant maintenue à une certaine distance de la face chargée $2_1$ de l'électret par les parois latérales de la cassette de façon à réserver, entre cette plaque et cette face, une chambre d'ionisation 5.

L'autre électrode 4 peut être au contact de l'électret, comme représenté, mais ce n'est pas indispensable.

On sait que la charge de l'électret 2 varie progressivement en fonction de la radioactivité ambiante du fait que la réception d'un rayonnement ionisant (rayons gamma, rayons X, neutrons) par la chambre 5 se traduit, soit par la décharge progressive directe de cet électret, soit par la création d'ions au voisinage dudit électret, qui recouvrent progressivement sa face $2_1$ d'une couche ionique tendant à neutraliser la charge de cette face.

Les variations de cette charge de l'électret sont d'autant plus rapides que l'intensité du rayonnement considéré est plus grande: la mesure de ces variations de charge permet donc de connaître ladite intensité.

Cette mesure est effectuée, ainsi que les calculs d'exploitation correspondants, non pas dans la cassette elle-même, mais dans un lecteur fixe A comprenant une poche 6 propre à recevoir la cassette en une position bien déterminée.

Ce lecteur comprend des moyens 7, 8 de mesure de la charge de l'électret qui viennent automatiquement coopérer avec ce dernier lors de ladite réception de la cassette dans la poche 6 et une unité d'exploitation 9 connectée à ces moyens de mesure.

Lesdits moyens de mesure peuvent être constitués de toute manière désirable.

Par exemple ils peuvent être agencés de façon d'une part, à établir un contact électrique entre les électrodes 3, 4 portées par la cassette et deux palpeurs compris par le lecteur et d'autre part, à introduire un volet conducteur porté par ledit lecteur entre l'électret 2 et l'une au moins 3 des électrodes de la cassette.

Ou bien encore les moyens de mesure en question sont agencés de façon d'une part, à appliquer à une électrode influencée par l'électret une tension propre à annuler le champ électrique créé par cet électret au voisinage de cette électrode et d'autre part, à mesurer cette tension d'annulation.

Selon encore une autre variante, les moyens de mesure en question sont agencés de façon à faire vibrer au moins une électrode influencée par l'électret et à mesurer la variation de charge ou de tension induite sur cette électrode par ladite vibration.

L'unité 9 est agencée de façon à élaborer une information E liée à la charge de l'électret 2 à l'instant considéré, information affichée sur un écran 10 et de préférence en outre mise en mémoire.

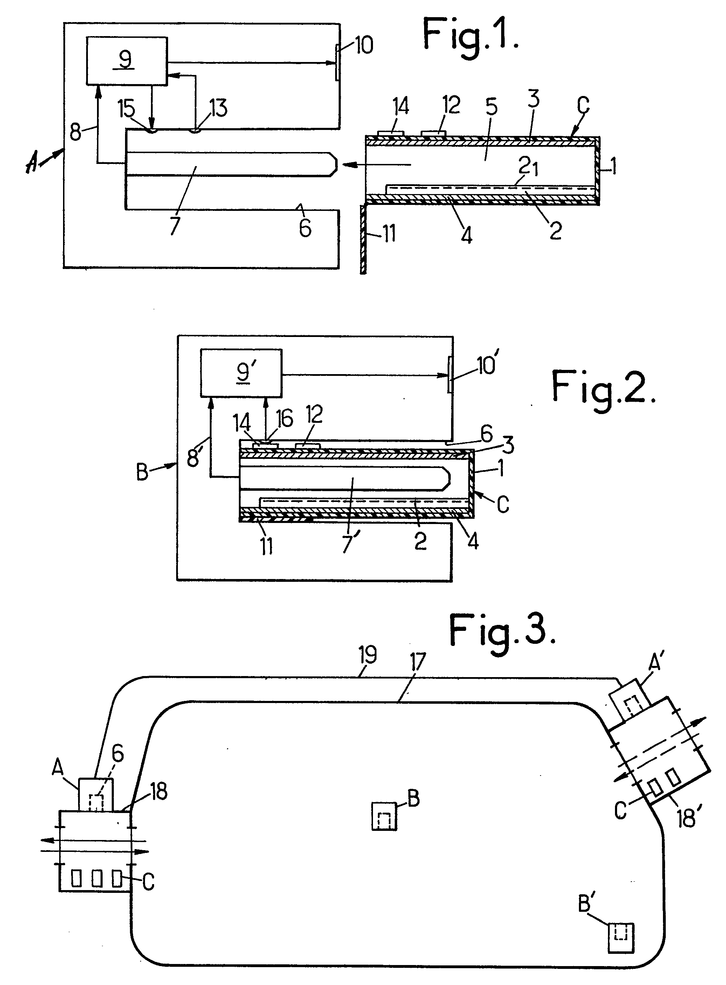

Lorsque la cassette C se trouve en son état de repos ou veille, c'est-à-dire en dehors des périodes de mesure proprement dites, les deux électrodes 3 et 4 sont reliées entre elles électriquement, par exemple à l'aide d'un élément conducteur logé dans un volet pivotant 11 constituant une petite face de la cassette en sa position de fermeture: en cette position de fermeture, ce volet sert non seulement à connecter les électrodes 3 et 4, mais aussi à protéger des impuretés le volume intérieur de la cassette en isolant de manière étanche ce volume de l'extérieur, ce qui rend possible le maintien d'une pression de gaz constante à l'intérieur de la cassette, indépendamment de la pression ambiante. Ledit volet 11 est ouvert (figure 1) lors des introductions de la cassette dans la poche 6 aux fins de mesure, ce qui déconnecte ici les électrodes.

La cassette comporte des moyens de toute nature désirable permettant son identification par le lecteur A: ces moyens sont avantageusement constitués par une plage 12 porteuse d'informations magnétiques propres à être lues par une tête magnétique 13 du lecteur et ensuite mises en mémoire dans un circuit approprié de l'unité 9, de préférence en association avec l'information E ci-dessus.

En outre, la cassette comporte des moyens propres à recevoir automatiquement, lorsqu'elle est introduite dans la poche 6, l'enregistrement d'une information F liée à l'information E ci-dessus concernant la charge de son électret, ces deux informations E et F pouvant être identiques.

Ces moyens sont avantageusement constitués par une plage magnétique 14 portée par la cassette et propre à être disposée exactement en regard d'une tête d'enregistrement magnétique 15 du lecteur A lorsqu'elle est introduite à fond dans la poche 6, ou à défiler en regard de cette tête 15 lors de son va-et-vient d'introduction dans cette poche et d'extraction hors de celle-ci.

La tête 15 est elle-même excitée par des circuits, de l'unité 9, choisis de façon à mettre l'information F sous sa forme enregistrable par cette tête 15 sur la plage 14.

L'enregistrement en question pourrait être réalisé de toute autre manière désirable, par exemple sur une mémoire électronique prévue dans la cassette, l'introduction de cette dernière dans la poche 6 ayant alors pour effet d'établir automatiquement un contact électrique à prises multiples entre cette mémoire et le circuit, de l'unité 9, prévu pour élaborer l'information électrique F, analogique ou digitale, à introduire dans ladite mémoire.

La transmission de l'information électrique F de l'unité 9 à la cassette C peut être également assurée sans établissement de contact électrique direct, notamment lorsque cette information se présente sous une forme binaire, ladite transmission pouvant alors être effectuée:

— par voie capacitive, deux électrodes destinées à constituer un même condensateur étant alors prévues respectivement sur le lecteur A et sur la cassette C et étant disposées automatiquement parallèlement l'une à l'autre, lorsque la cassette est introduite à fond dans la poche 6,

— ou encore par induction magnétique, deux enroulements électriques étant alors prévus respectivement sur le lecteur A et sur la cassette C en des emplacements tel qu'ils se trouvent automatiquement en des positions adjacentes et coaxiales lorsque la cassette est mise an place dans la poche 6.

L'enregistrement magnétique présente l'avantage important de n'exiger aucune source de courant électrique sur la cassette, pas plus que l'électret lui-même.

Pour les autres solutions, on adoptera sur la cassette des circuits électroniques à très faible consommation électrique tels que des circuits C-MOS.

Pour le porteur d'une cassette ainsi porteuse elle-même de l'information F relative à l'état initial de charge de son électret, il est inutile de se présenter à nouveau devant le lecteur A pour connaître l'évolution dans le temps de la dose d'irradiation reçue: il lui suffit à cet effet d'introduire ladite cassette dans un lecteur auxiliaire B beaucoup plus simple que le lecteur A et qui va être maintenant décrit en référence à la figure 2.

Un tel lecteur comprend, comme le lecteur A, une poche 6' propre à recevoir la cassette en une position bien déterminée, des moyens de mesure 7', 8' reliés à une unité d'exploitation 9' et un écran d'affichage 10'.

Mais ici on ne trouve plus de moyens d'identification comparables à la précédente tête 13 et aux moyens associés à cette dernière, et la précédente tête d'enregistrement ou analogue 15 est ici remplacée par une tête de lecture ou analogue 16 propre à «lire» l'information F préalablement enregistrée sur chaque cassette C.

Cette lecture est bien entendu adaptée à la manière dont l'information à lire a été enregistrée sur la cassette: en particulier, s'il s'agit d'une information emmagasinée sur une mémoire électronique dont le contenu est libérable uniquement sur ordre, l'unité 9' peut être agencée de façon à donner à cette mémoire l'ordre de déclencher le processus de transmission de l'information emmagasinée.

De plus, l'unité 9' est agencée de façon à effectuer la différence entre les valeurs des deux informations qu'elle reçoit respectivement à partir de la tête 16 et à partir des moyens de mesure 7', 8' et qui correspondent respectivement à la charge initiale et à la charge actuelle de l'électret. En outre, cette unité 9' est agencée de façon à afficher sur l'écran 10' la différence ainsi calculée ou une information liée à cette différence telle que la dose totale d'irradiation reçue par la cassette entre les deux mesures de charge.

Il est à noter qu'il est totalement inutile d'interconnecter le lecteur auxiliaire B avec le lecteur d'entrée A.

Il est donc possible de disposer, dans des conditions particulièrement simples et économiques, d'une pluralité de tels lecteurs auxiliaires B, B' . . . au sein de l'enceinte à contrôler, comme il a été schématisé sur la figure 3 où ladite enceinte a été désignée par la référence 17.

Sur cette figure 3, on a désigné par 18, 18' respectivement deux sas d'accès à l'enceinte 17.

Le sas 18, équipé d'un lecteur d'entrée A, est par exemple prévu pour les entrées et sorties normales du personnel dans l'enceinte 17 et le sas 18' est un accès d'entrée ou de sortie annexe ou de secours également équipé d'un lecteur A' du type du lecteur A et pouvant rendre exactement les mêmes services que celui-ci du fait qu'il est interconnecté avec ce dernier par un câble 19.

Bien entendu, il est intéressant que chaque lecteur d'entrée A, A' puisse lui-même servir de lecteur de sortie, c'est-à-dire puisse afficher la dose d irradiation reçue par une personne entre, d'une part, son entrée dans l'enceinte 17 par le sas 18 correspondant, entrée au cours de laquelle il prélève une cassette C à un râtelier disposé dans ledit sas, puis introduit sa cassette dans la poche 6 du lecteur A correspondant et, d'autre part, sa sortie de ladite enceinte 17 par ledit sas 18, sortie au cours de laquelle il réintroduit sa cassette dans la poche 6 ci-dessus avant de la replacer sur le râtelier, et ce indépendamment des contrôles intermédiaires effectués entre ces deux instants d'entrée et de sortie à l'aide des lecteurs auxiliaires B.

En particulier, il convient que la simple seconde introduction de la même cassette C dans la poche 6 assure automatiquement l'affichage de dose désiré.

A cet effet, l'on aménage de préférence le lecteur A de façon telle que toute «seconde réception» d'une cassette se traduise par l'affichage en question.

Un tel résultat suppose:

— que la «première réception» de la cassette par le lecteur A a donné lieu non seulement à l'identification de cette cassette et à la mesure de la charge de son électret, mais aussi à la mise en mémoire de ces deux données,

— et que la «seconde réception» donne ensuite lieu automatiquement, non seulement à une seconde identification de la cassette et à une seconde mesure de la charge de son électret, mais aussi à la lecture des deux données ci-dessus, puis à la comparaison entre les deux valeurs successivement mesurées (savoir celle mise en mémoire et celle mesurée la seconde fois) et enfin à l'affichage du résultat de cette comparaison.

Selon une variante, on pourrait prévoir que la mise en mémoire de la première information relative à la charge de l'électret est assurée uniquement sur la cassette C et non sur le lecteur A, chaque lecteur A étant alors agencé à la fois des deux manières décrites à propos des figures 1 et 2 ci-dessus de façon à assurer, lors de chaque première réception de cassette, l'enregistrement désiré sur cette cassette et, lors de chaque seconde réception de cassette, la lecture dudit enregistrement: à cet effet, l'identification d'une «seconde réception» aurait pour conséquence de transformer la fonction de l'organe (15 ou 16), du lecteur, qui est appelé à coopérer avec la cassette de sa fonction d'enregistrement à sa fonction de lecture et ce serait l'inverse pour chaque «première réception».

On pourrait également envisager de prévoir sur la cassette plusieurs organes distincts affectés respectivement à la réception d'une information du lecteur et à la restitution d'une information à ce lecteur, chacun de ces organes pouvant être activé séparément lors des introductions de la cassette dans les différents lecteurs.

On pourrait encore envisager que la lecture signalée de l'enregistrement de la cassette ait pour effet d'effacer cet enregistrement, pour garantir que l'information enregistrée sur une cassette corresponde toujours à une véritable «pemière réception» de celle-ci dans un lecteur A et non à un traitement antérieur.

En suite de quoi, et quel que soit le mode de réalisation adopté, on dispose finalement d'une installation de radiométrie à cassettes à électret dont la constitution et le fonctionnement résultent suffisamment de ce qui précède.

Cette installation présente un certain nombre d'avantages par rapport à celles antérieurement connues, notamment celui de pouvoir multiplier de manière simple et économique les postes de lecture des contenus de ces cassettes sans augmenter sensiblement les poids, dimensions et prix de ces dernières, lesquelles doivent simplement être adaptées à recevoir automatiquement des informations relatives à la charge de leurs électrets à des instants initiaux donnés.

Comme il va de soi, et comme il résulte d'ailleurs déjà de ce qui précède, l'invention ne se limite nullement à ceux de ses modes d'application et de réalisation qui ont été plus spécialement envisagés; elle en embrasse toutes les variantes définies par les revendications, en particulier:

— celles où les moyens d'identification de la cassette seraient complétés par des moyens d'identification du porteur de cette cassette, moyens faisant appel éventuellement à un support d'information indépendant de ladite cassette, tel qu'une carte magnétique, ladite identification supplémentaire permettant éventuellement de tenir compte de l'histoire dudit porteur au point de vue de la réception des doses d'irradiation,

— celles où le support de l'information relative à la charge de l'électret serait certes encore porté par la cassette, mais indirectement, par l'intermédiaire d'un élément fixé sur cette cassette d'une façon qui pourrait être éventuellement amovible.

**Revendications**

1. Dispositif de mesure d'un rayonnement ionisant comprenant, d'une part, au moins une cassette (C) contenant un électret (2) entre deux électrodes (3, 4) maintenues écartées l'une de l'autre de façon à réserver entre l'électret et une électrode une chambre d'ionisation (5) sensible au rayonnement à mesurer et, d'autre part, au moins un lecteur d'entrée (A) comprenant une poche (6) propre à recevoir la cassette (C) en une position bien déterminée, une source de courant électrique, des moyens pour identifier la cassette, des moyens de lecture et de mesure de la charge de l'électret contenu dans celle-ci et des moyens propres à afficher une information liée au résultat de cette mesure, caractérisé en ce qu'il comprend en outre au moins un lecteuer auxiliaire (B), en ce que chaque cassette (C) comprend des moyens (14) propres à recevoir automatiquement l'enregistrement d'une information relative à la charge de son électret (2) lorsqu'elle est introduite initialement dans un lecteur d'entrée (A) et à présenter l'information enregistrée de façon telle qu'elle puisse être lue automatiquement lors de son introduction dans un lecteur auxiliaire (B), en ce que chaque lecteur d'entrée (A) comprend, en plus de moyens propres à mesurer la charge instantanée de l'électret contenu dans chaque cassette (C) qui y est introduite, des moyens (15) propres à élaborer l'information ci-dessus et à l'enregistrer (en 14) sur ladite cassette introduite, et en ce que chaque lecteur auxiliaire (B) comprend, en plus de moyens propres à mesurer la charge instantanée de l'électret contenu dans chaque cassette (C) qui y est introduite, des moyens (16) propres à lire (en 14) l'information préalablement enregistrée sur cette cassette et des moyens propres à calculer et à afficher une donnée liée à la différence entre les deux charges successivement mesurées de l'électret, donnée telle que la dose d'irradiation reçue par la cassette entre les instants des deux mesures.

2. Dispositif de mesure selon la revendication 1, pour mesurer la radioactivité dans une enceinte dont l'entrée est équipée d'un lecteur d'entrée du genre indiqué, caractérisé en ce que ce lecteur d'entrée (A) est agencé de façon à pouvoir servir également de lecteur de sortie, c'est-à-dire à pouvoir afficher, lors de la sortie du porteur d'une cassette (C) hors de l'enceinte (17) la dose d'irradiation reçue par ce porteur depuis son entrée dans cette enceinte.

3. Dispositif de mesure selon la revendication 2, caractérisé en ce que le lecteur d'entrée (A) comporte en outre, d'une part, des moyens pour asservir à la réception initiale d'une cassette par ce lecteur une mise en mémoire simultanée de l'identification de cette cassette et de la charge de l'électret contenu dans celle-ci mesurée à l'instant de cette réception initiale et, d'autre part, des moyens pour asservir à la réception suivante de la même cassette par ledit lecteur, non seulement une nouvelle identification de cette cassette et une nouvelle mesure de la charge, mais aussi la lecture de la valeur mise en mémoire de ladite charge, le calcul de la différence entre les deux valeurs de charge ainsi respectivement mesurée et lue, et l'affichage de cette différence ou d'un paramètre lié à celle-ci, tel que notamment la dose d'irradiation correspondante.

4. Dispositif selon l'une quelconque des revendications 2 et 3, caractérisé en ce que le lecteur d'entrée (A) comporte en outre des moyens pour effacer automatiquement de la cassette l'information enregistrée sur elle, lors de sa deuxième réception dans ce lecteur d'entrée.

5. Dispositif de mesure selon l'une quelconque des précédentes revendications, caractérisé en ce qu'il comprend une pluralité de lecteurs auxiliaires (B) indépendants les uns des autres.

6. Dispositif de mesure selon l'une quelconque des précédentes revendications, caractérisé en ce que les moyens prévus sur la cassette (C) pour recevoir l'enregistrement indiqué d'un type magnétique et se présentent sous la forme d'une plage magnétique (14), les moyens d'enregistrement (15) et de lecture (16) de l'information correspondante étant alors des têtes magnétiques.

7. Dispositif de mesure selon l'une quelconque des revendications 1 à 5, caractérisé en ce que les moyens prévus sur la cassette pour recevoir l'enregistrement indiqué sont d'un type électronique et sont reliés à un connecteur à contacts multiples.

8. Dispositif de mesure selon l'une quelconque des revendications 1 à 5, caractérisé en ce que les moyens prévus sur la cassette pour recevoir l'enregistrement indiqué sont d'un type électronique et en ce que des moyens sont prévus pour transmettre par induction magnétique ou électrique l'information à enregistrer du lecteur d'entrée à la cassette.

9. Dispositif de mesure selon l'une quelconque des précédentes revendications, caractérisé en ce que chaque cassette (C) comprend une face ouvrable propre à être ouverte et orientée de façon telle, lors de l'introduction de la cassette dans un lecteur, que cette introduction assure automatiquement la mise en place, à travers ladite face ouverte, de moyens de mesure de la charge de l'électret, moyens compris par le lecteur.

10. Dispositif de mesure selon la revendication 9, caractérisé en ce qu'un volet de protection (11) est prévu pour obturer de façon étanche la face ouvrable de la cassette en dehors des instants de mesure.

11. Cassette à électret, caractérisé en ce qu'elle est compatible avec le dispositif de mesure selon l'une quelconque des précédentes revendications et en ce qu'elle comprend à cet effet les moyens correspondants d'enregistrement et de restitution d'information relatives à la charge de son électret.

12. Lecteur de cassettes à électret, caractérisé en ce qu'il est compatible avec le dispositif de mesure selon l'une quelconque des revendications 1 à 10, et en ce qu'il comprend à cet effet les moyens correspondants de mesure, d'enregistrement, de calcul et/ou d'affichage relatifs à la charge des électrets desdites cassettes.

**Patentansprüche**

1. Vorrichtung zum Messen ionisierender Strahlungen, die einerseits aus wenigstens einer Kassette (C) mit einem zwischen zwei im Abstand voneinander angeordneten Elektroden (3, 4) liegenden Elektret (2) besteht, wobei zwischen dem Elektret und einer Elektrode eine Ionisationskammer (5) gebildet ist, die der zu messende Strahlung empfindlich ist, und andererseits wenigstens einen Eingangsleser (A), der mit einer Tasche (6) versehen ist, die die Kassette (C) in einer genau vorgegebenen Stellung aufnehmen kann, sowie eine elektrische Stromquelle, Einrichtungen zum Identifizieren der Kassette, Einrichtungen zum Lesen und Messen der Ladung des Elektreten, der in der Kassette enthalten ist, und Einrichtungen zum Anzeigen einer Information entsprechend dem Ergebnis der Messung enthält, dadurch gekennzeichnet, dass die Vorrichtung ferner wenigstens einen Hilfsleser (B) enthält, dass jede Kassette (C) Einrichtungen (14) enthält, mit denen die Aufzeichnung einer Information entsprechend der Ladung seines Elektreten (2) automatisch empfangen werden kann, wenn diese anfänglich in einen Eingangsleser (A) eingegeben wird, und mit denen die aufgezeichneten Information so dargeboten werden kann, dass sie automatisch bei ihrer Eingabe in einen Hilfsleser (B) lesbar ist, dass jeder Eingangsleser (A) darüber hinaus Einrichtungen zum Messen der augenblicklichen Ladung des Elektreten, der in jeder eingeführten Kassette (C) enthalten ist, Einrichtungen (15) zum Verarbeiten und zum Aufzeichnen der Information (bei 14) auf der eingeführten Kassette enthält und dass jeder Hilfsleser (B) ferner mit Einrichtungen zum Messen der augenblicklichen Ladung des Elektreten, der in jeder eingelegten Kassette (C) enthalten ist, Einrichtungen (16) zum Lesen (bei 14) der vorher auf der Kassette aufgezeichneten Information und mit Einrichtungen zum Berechnen und Anzeigen eines Wertes versehen ist, der der Differenz zwischen den beiden nacheinander gemessenen Ladungen des Elektreten entspricht, wobei der Wert z.B. die Dosis der Strahlung sein kann, die die Kassette zwischen den beiden Messzeiten aufgenommen hat.

2. Messvorrichtung nach Anspruch 1 zum Messen der Radioaktivität in einem Raum, dessen Eingangsleser der erwähnten Art ausgerüstet ist, dadurch gekennzeichnet, dass der Eingangsleser (A) so ausgebildet ist, dass er auch als Ausgangsleser dienen kann, d.h. wenn der Träger einer Kassette (C) den raum (17) verlässt, die Dosis der Strahlung, die der Träger seit seinem Eintritt in den Raum aufgenommen hat, aufgezeichnet werden kann.

3. Messvorrichtung nach Anspruch 2, dadurch gekennzeichnet, dass der Eingangsleser (A) einerseits Einrichtungen enthält, um bei der Erstaufnahme einer Kassette durch den Eingangsleser eine gleichzeitige Speicherung der Identifizierung dieser Kassette und der im Augenblick der Erstaufnahme der Kassette gemessenen Ladung des in der Kassette enthaltenen Elektreten zu steuern, und andererseits mit Einrichtungen versehen ist, mit denen bei der nächsten Aufnahme der gleichen Kassette durch den Eingangsleser nicht nur eine neue Identifizierung der Kassette und eine neue Messung der Ladung, sondern auch das Lesen des gespeicherten Wertes der erwähnten Ladung, die Berechnung der Differenz zwischen den beiden Werten der Ladung, die auf diese Weise gemessen und gelesen wurden, und die Aufzeichnung dieser Differenz oder eines entsprechenden Parameters, insbesondere die Dosis der Strahlung, gesteuert werden.

4. Messvorrichtung nach einem der Ansprüche 2 oder 3, dadurch gekennzeichnet, dass der Eingangsleser (A) Einrichtungen enthält, mit denen die auf der Kassette aufgezeichnete Information bei der zweiten Aufnahme im Eingangsleser automatisch gelöscht wird.

5. Messvorrichtung nach einem der vorhergehenden Ansprüche, dadurch gekennzeichnet, dass sie mehrere Hilfsleser (B) enthält, die unabhängig voneinander sind.

6. Messvorrichtung nach einem der vorhergehenden Ansprüche, dadurch gekennzeichnet, dass die an der Kassette (C) vorgesehenen Einrichtungen zum Aufzeichnen der Information magnetischer Art sind und aus einer Magnetplatte (14) bestehen, wobei die Aufzeichnungs- und die Leseeinrichtungen (15, 16) für die entsprechende Information ebenfalls Magnetköpfe sind.

7. Messvorrichtung nach einem der Ansprüche 1 bis 5, dadurch gekennzeichnet, dass die an der Kassette vorgesehenen Einrichtungen zum Aufzeichnen der Information elektronischer Art und mit einem Verbindungselement mit Mehrfachkontakten verbunden sind.

8. Messvorrichtung nach einem der Ansprüche 1 bis 5, dadurch gekennzeichnet, dass die an der Kassette vorgesehenen Einrichtungen zum Aufzeichnen der Information elektronischer Art sind und dass Einrichtungen zur Übertragung durch magnetische oder elektrische Induktion der aufzuzeichnenden Information des Eingangslesers auf die Kassette vorgesehen sind.

9. Messvorrichtung nach einem der Ansprüche 1 bis 8, dadurch gekennzeichnet, dass jede Kassette (C) eine zu öffnende Oberfläche enthält, die während des Einschiebens der Kassette in einen Leser so geöffnet und orientiert werden kann, dass das Einschieben automatisch die richtige Lage von in dem Leser enthaltenen Einrichtungen zum Messen der Ladung des Elektreten durch die geöffnete Oberfläche sicherstellt.

10. Messvorrichtung nach Anspruch 9, dadurch gekennzeichnet, dass eine Schutzklappe (11) vorgesehen ist, um die Oberfläche der Kassette, die geöffnet werden kann, ausserhalb der Messzeiten dicht zu verschliessen.

11. Kassette mit einem Elektreten, dadurch gekennzeichnet, dass sie in der Messvorrichtung gemäss einem der vorhergehenden Ansprüche verwendbar ist und zu diesem Zweck entsprechende Einrichtungen zum Aufzeichnen und Verarbeiten von Informationen enthält, die der Ladung seines Elektreten entsprechen.

12. Leser für Kassette mit einem Elektreten, dadurch gekennzeichnet, dass der Leser für eine Messvorrichtung gemäss den Ansprüchen 1 bis 10 verwendbar ist und zu diesem Zweck Einrichtungen zum Messen, Aufzeichnen, Berechnen und/oder Anzeigen von Informationen entsprechend der Ladung der Elektrete dieser Kassette enthält.

**Claims**

1. Measuring device for ionizing radiation comprising, on the one hand, at least one cassette (C) containing an electret (2) between two electrodes (3, 4) held separated from one another so as to preserve between the electret and one electrode an ionizing chamber (5) sensitive to the radiation to be measured and, on the other hand, at least one «entry» reader (A) comprising a pocket (6) adapted to receive the cassette (C) in a well-determined position, a source of electrical current, means for identifying the cassette, means for reading and measuring the charge of the electret contained in the latter and means adapted to display data connected with the result of this measurement, characterized in that it further comprises at least one auxiliary reader (B), in that each cassette (C) comprises means (14) adapted to receive automatically the recording of data relating to the charge of its electret (2) when it is initially inserted into an entry reader (A) and to present the recorded data so that it can be read automatically on its insertion into an auxiliary reader (B), in that each entry reader (A) comprises, in addition to means adapted to measure the momentary charge of the electret contained in each cassette (C) which is introduced therein, means (15) adapted to process the above-said data and to record it (in 14) on said inserted cassette, and in that each auxiliary reader (B) comprises, in addition to means adapted to measure the momentary charge of the electret contained in each cassette (C) which is inserted therein, means (16) adapted to read (in 14) the data previously recorded on this cassette and means adapted to calculate and to display data connected with the difference between two successively measured charges of the electret, data such as data representing the radiation dose received by the cassette between the moments of the two measurements.

2. Measuring device according to claim 1, for measuring the radioactivity in an enclosure whose entrance is equipped with an entry reader of the above indicated type, characterized in that said entry reader (a) is arranged so as to be able to serve also as an exit reader, that is to say capable of displaying, on the exit of the wearer of a cassette (C) from the enclosure (17), the radiation dose received by this wearer since his entrance into said enclosure.

3. Measuring devise according to claim 2, characterized in that the entry reader (A) comprises also, on the one hand, means for slaving to the initial reception of a cassette by this reader a simultaneous memorisation of the identification of said cassette and of the charge of the electret contained in the latter measured at the moment of this initial reception and, on the other hand, means for slaving to the following reception of the same cassette by said reader, not only a new identification of this cassette and a new measurement of the charge, but also the reading of the value memorised of said charge, the calculation of the difference between the two charge values respectively measured and read, and the display of this difference of parameter connected with the latter, such as notably the corresponding radiation dose.

4. Device according to anyone of claims 2 and 3, characterized in that the entry reader (A) comprises also means for automatically erasing from the cassette data recorded on it, on its second reception in this entry reader.

5. Device according to anyone of the preceding claims, characterized in that it comprises a plurality of auxiliary readers (B) independant of one another.

6. Measuring device according to anyone of the preceding claims, characterized in that the means provided on the cassette (C) for receiving the recording indicated are of magnetic type and are in the form of a magnetic track (14), the recording (15) and readout (16) means of the corresponding data then being magnetic heads.

7. Measuring device according to anyone of claims 1 to 5, characterized in that the means provided on the cassette for receiving the recording indicated are of electronic type and are connected to a multiple contact connector.

8. Measuring device according to anyone of claims 1 to 5, characterized in that the means provided on the cassette for receiving the recording indicated are of electronic type and in that means are provided for trasmitting by magnetic or electric induction the data to be recorded from the entry reader to the cassette.

9. Measuring device according to anyone of the preceding claims, characterized in that each cassette (C) comprises an openable face adapted to be opened and oriented so that, on the insertion of the cassette into a reader, this insertion automatically ensures the positioning through said open face, of measuring means of the charge of the electret, said means being comprised by the reader.

10. Measuring device according to claim 9, characterized in that a protective flap (11) is provided to obturate in sealed manner the openable face of the cassette outside of the moments of measurement.

11. Electret cassette, characterized in that it is compatible with the measuring device according to anyone of the preceding claims and in that it comprises for this purpose the corresponding means for recording and restoring data relating to the charge of its electret.

12. Electret cassette reader, characterized in that it is compatible with the measuring device according to anyone of claims 1 to 10 and in that it comprises for this purpose the corresponding means for measuring, recording, calculation and/or display relating to the charge of the electrets of said cassettes.

Fig.1.

Fig.2.

Fig.3.